# EUROPEAN PATENT SPECIFICATION

(11) **EP 0 640 174 B1**
(45) Date of publication and mention of the grant of the patent: **09.09.1998**
(21) Application number: 93910187.9
(22) Date of filing: 12.05.1993
(51) Int. Cl.: F02B 37/12

(54) **INTERNAL COMBUSTION ENGINES**
BRENNKRAFTMASCHINE
MOTEURS A COMBUSTION INTERNE

(30) Priority: 14.05.1992 GB 9210339; 13.10.1992 GB 9221500
(43) Date of publication of application: 01.03.1995
(73) Proprietor: Rolls-Royce Motors Limited, Crewe Cheshire CW1 3PL (GB)
(72) Inventor: MACKAY, Stewart, Alexander 15 Brooklands Grove, Cheshire CW1 3JS (GB)
(74) Representative: Downey, William Gerrard
(86) International application number: GB9300976
(87) International publication number: WO9323661

(56) References cited:
- EP-A- 0 111 196
- GB-A- 2 148 391
- US-A- 3 233 403
- US-A- 4 519 210

## Description

The present invention relates to pressure charging apparatus for internal combustion engines.

The pressure charging apparatus may be a turbocharger or a supercharger in which, typically, in one known arrangement, engine boost level is controlled by a pneumatically controlled wastegate mechanism. The engine boost level is defined as the pressure level, relative to atmospheric, to which the turbocharger or supercharger compresses the air charge in the inlet manifold. The wastegate position, which controls the boost level is in turn controlled by a controlling pneumatic pressure which is regulated by a boost control solenoid valve. The boost control solenoid valve, which is fitted between the wastegate actuator mechanism and a pressure source (or reservoir), is actuated by an electrical control signal. This may be in the form of a voltage, frequency or duty cycle. The boost control solenoid valve is of a type where the full supply pressure is diverted to the wastegate actuator to open it fully (causing low engine boost) when a 'low' signal is supplied to the solenoid. The full supply pressure is diverted to vent away and no pressure reaches the wastegate actuator (causing high engine boost), when a 'high' signal is supplied to the solenoid. The solenoid operation is infinitely variable between these two extremes.

The signal to the boost control solenoid valve is usually supplied from an Electrical Control Unit (ECU), which may use engine speed, boost pressure and engine load amongst the incoming parameters. This enables the boost pressure to be controlled as desired via the action of the boost control solenoid valve. The ECU is pre-programmed to provide the desired boost levels dependent upon the incoming parameters. Additional safeguards may be incorporated into the inputs to the ECU, such that a low signal is sent to the boost control solenoid valve under conditions of engine stress (vibration or combustion detonation as examples) or for reasons of vehicle safety inhibits (cruise control operation, vehicle braking and gearchange operation are examples).

The existing arrangement is such that when a change is made to the electrical signal to the boost control solenoid valve, there is a delay before the wastegate actuator assumes the new position. This delay is dependent upon the control dynamics of the system such as the length of pipes and volume of the wastegate actuator and is generally engineered to be small. Under conditions of a changing signal to the boost control solenoid valve, there may also be a tracking error present that is to say the difference between the required and actual signal levels. This may occur under conditions of engine acceleration.

The existing arrangement does not permit the control dynamics to be altered in response either to the nature of the inputs to the ECU or to the state of the output from the ECU to the boost control solenoid valve.

EP-A-111196 discloses a pressure charging device for an internal combustion engine. In this device the wastegate actuator comprises two chambers and is controlled in dependence upon the pressure difference between them. One of the chambers is permanently connected to atmosphere which leads to lack of control.

According to the present invention there is provided pressure charging apparatus for internal combustion engines comprising means for supplying air under pressure to the engine inlet, a wastegate, a wastegate actuator for closing and opening the wastegate in order to alter the pressure in the engine inlet, the said wastegate actuator comprising a first chamber and a second chamber separated by a diaphragm to which a wastegate actuating member is connected, first valve means operative to receive signals from a first electronic boost control in order to control air flow from the air supply to the first chamber of the wastegate actuator, or via a first vent , to atmosphere whereby to control opening of the wastegate, characterised by a second electronic control and second valve means operative to receive signals from the second electronic control and to connect the air supply to the second chamber of the wastegate actuator or vent the second chamber to atmosphere via a second vent whereby to control closing of the wastegate, and a full throttle sensor operative under full throttle operating conditions to supply a signal to the second electronic control to cause the second valve means to shut the wastegate thereby overriding the boost control by the first boost electronic control of the first valve means and, once a predetermined overboost thereshold is reached, the second electronic control being operative to reduce the signal at the second valve means gradually causing a controlled reductions in manifold boost pressure.

In a preferred embodiment of the invention, the means for supplying air comprises an air dompressor. The first valve means comprises a boost control solenoid valve. The boost control is programmed to operate the boost control solenoid valve at a duty cycle which may be infinitely variable between 0 and 100%. The duty cycles are advantageously 100% and 70%.

In order that the invention may be more clearly understood, two embodiments thereof will now be described, by way of example, with reference to the accompanying drawings, in which:-
Figure I diagrammatically shows an existing internal combustion engine boost control system,
Figure 2 diagrammatically shows an internal combustion engine boost control system according to the invention,
Figure 3a shows duty cycle plotted against engine speed for the arrangements of Figures I and 2 (that for Figure I is shown in solid line and that for Figure 2 is shown in dotted line).
Figure 3b shows engine inlet manifold pressures plotted against engine speed, the pressures corresponding to the duty cycle values of Figure 3a, for the arrangements of Figures 1 and 2 (that for Figure 1 is shown in solid line, that for Figure 2 is shown in dotted line and that for steady state arrangements is shown in chain line).
Figure 4a shows duty cycle plotted against time for the arrangements of Figures 1 and 2 (that for Figure 1 is shown in solid line and that for Figure 2 is shown in dotted line).
Figure 4b shows engine inlet manifold pressures plotted against time for the arrangements of Figures 1 and 2 (that for Figure 1 is shown in solid line and that for Figure 2 is shown in dotted line),
Figure 4c shows the signal applied to a switchover valve plotted against time,
Figure 5 shows a logic sequence diagram for the operation of the system of Figure 2,
Figure 6 shows a logic diagram similar to Figure 5 but for the prior art system of Figure 1,
Figure 7 shows an alternative embodiment to that of Figure 2,
Figure 8a shows a graph of duty cycle against time,
Figure 8b shows a graph of switchover valve signal against time,
Figure 8c shows a graph of manifold boost pressure against time (all graphs 8a, 8b and 8c under full throttle acceleration from rest for the embodiment of Figure 7), and
Figure 9 shows a particular form of wastegate for the embodiment of Figure 7.

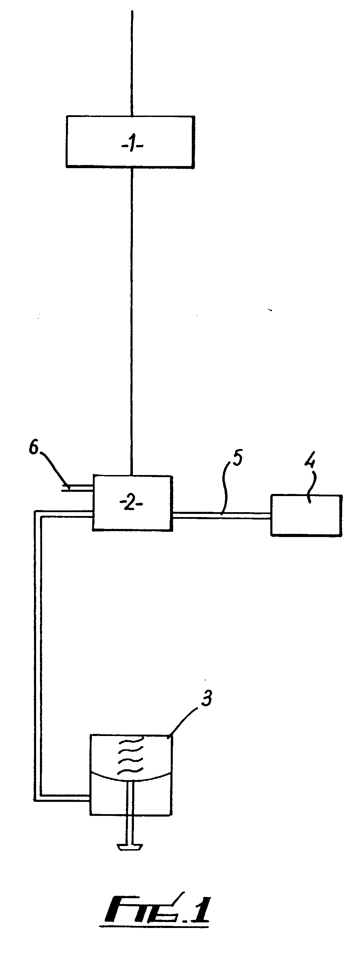

Referring to Figure 1, the system comprises a boost control electronic control unit (ECU)1, a boost control solenoid valve 2 and a wastegate actuator 3. Under the control of the ECU, the solenoid controls air flow from an air pressure supply 4 via an air pressure line 5 and direct it either to a vent 6 or to the wastegate actuator 3 which in turn controls the wastegate (not shown) . The boost control ECU receives signals via the vehicle wiring harness. These may comprise signals from knock sensors, cruise control devices, brake lights, boost pressure measurement devices and engine speed measurement devices.

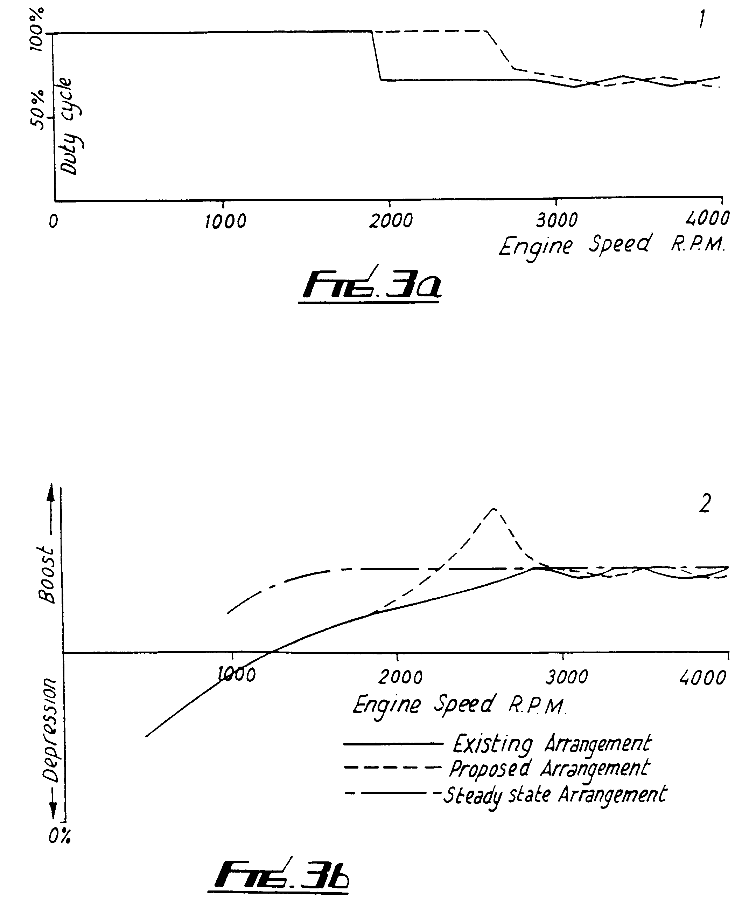

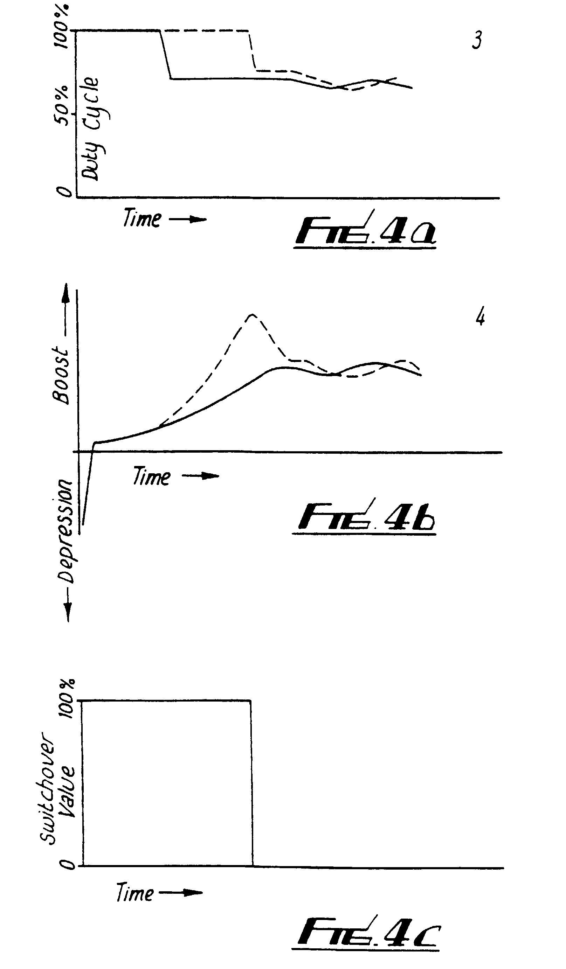

The boost control ECU 1 contains a duty cycle "map" similar to that shown in Figure 3 and a boost "map" similar to that shown in Figure 4. The duty cycle map values are chosen such that the resultant boost values achieved from the engine will be slightly higher than the boost values contained within the boost map. An internal function of the boost control ECU I monitors the actual engine boost level. When the boost map value is reached, it is able to moderate the duty cycle signal to the boost control solenoid valve 2. This signal is then less than that held within the duty cycle map. In response to this reduced signal, the wastegate opens further, reducing the engine's capacity to produce boost. The boost level therefore falls. Once the boost level falls below the boost map value, the duty cycle signal is restored to that contained within the duty cycle map. This feedback system is continuous. The matching of the actual duty cycle to achieve the boost map levels and the values within the duty cycle map has to be made carefully. If the difference is too great wild oscillations in engine boost level may result. The full load duty cycle map referred to above has maximum values of about 70% in practice. Similar values at low engine loads and speeds are near to 100%.

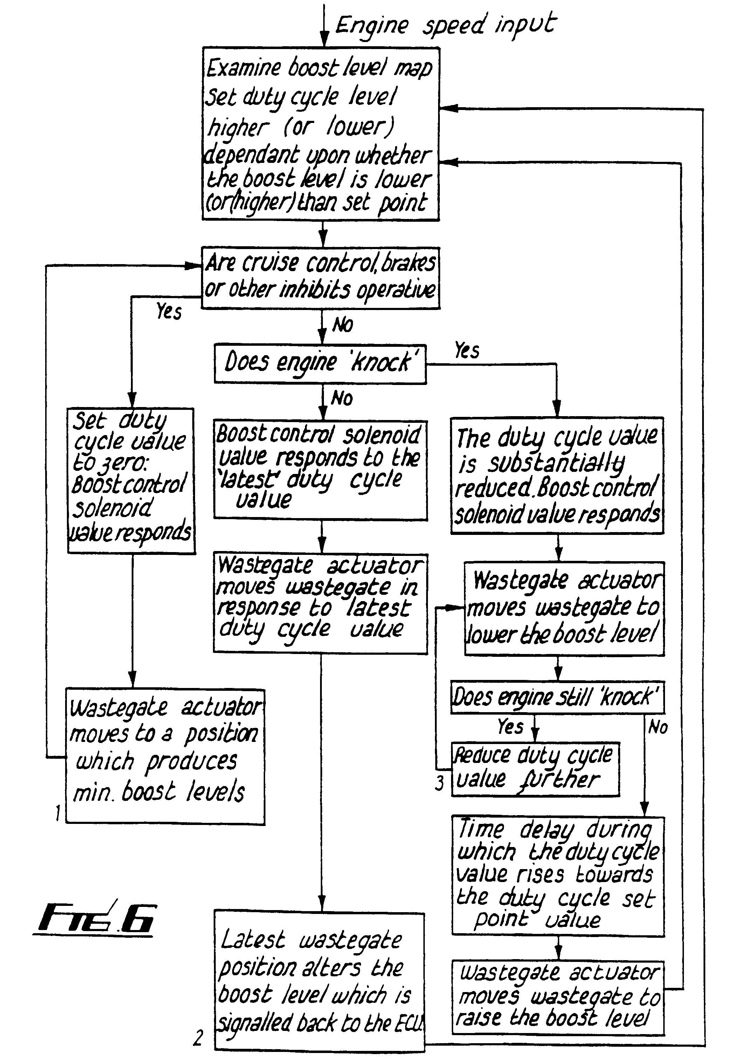

With the above described system, the wastegate operates in the following manner with the engine subject to full throttle acceleration from rest. In the rest condition, the engine is idling and the wastegate is fully shut with an electrical duty cycle signal of 100% being supplied to the boost control solenoid valve 2. When full throttle is applied, the engine quickly accelerates to the torque converter (gearbox) stall speed. At this speed, the value within the duty cycle full load map dictates that the wastegate should be opening in response to a 70% duty cycle. This is a problem condition. The wastegate is open and yet the boost value within the boost map has not been reached. The open wastegate is responsible for a degree of boost lag (and poorer performance than needs be). Once the boost level has reached the level within the boost map, the duty cycle is "moderated" as previously described. The engine is then running at something close to the desired steady state maximum power full load condition. A logic sequence chart for the operation of this system is shown in Figure 6.

It can be seen that the logic chart allows three potential outcomes.
1) In response to any active inhibits, the boost control solenoid valve receives a duty cycle of zero. This fully opens the wastegate, for as long as the inhibits are active.
2) The wastegate position is constantly in a state of being altered, such that the engine boost level is controlled close to the desired 'map' values. This is the 'normal' steady state running condition for the engine.
3) Under conditions of continuous engine 'knock' the duty cycle value 'sent' to the boost control solenoid valve will eventually reduce to a value of zero. This is not a 'normal' engine running condition.
The relationship between the boost ECU, boost control solenoid valve, wastegate actuator and wastegate position may be discerned from the schematic diagram of the existing boost control arrangement.

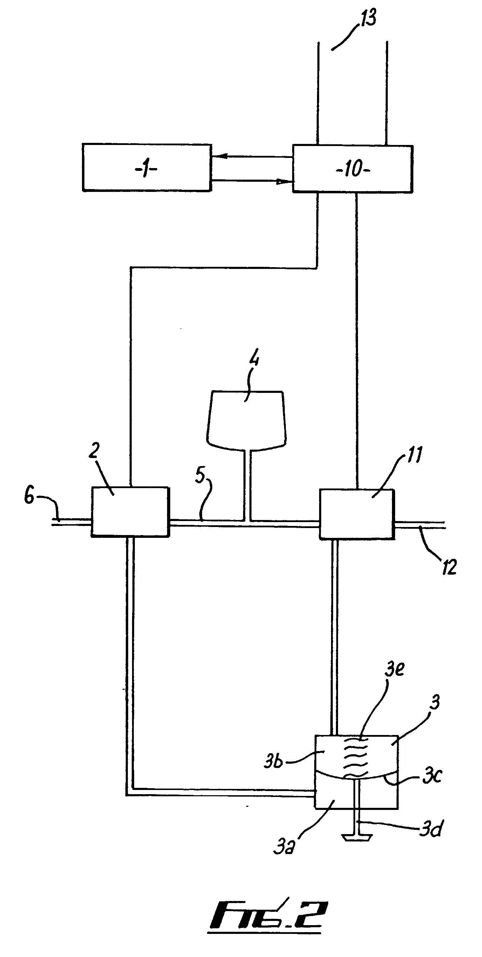

Referring to Figure 2, in which equivalent parts bear the same reference numerals as in Figure 1, the system of the invention comprises an additional electronic control unit (ECU) 10. This occupies the position of ECU 1 in the Figure 1 embodiment and communicates with the boost control ECU 1. Apart from the signals received by way of the vehicle wiring harness, the new ECU 10 also receives a signal from a full throttle sensor 13. The figure 2 system also comprises a switchover valve 11. This valve 11 and the boost control solenoid valve 2 are connected to receive signals from the new ECU 10. Airlines run from the switchover valve to the air pressure supply 4, the boost control solenoid valve 2, and the opposing side of the wastegate actuator 3. Solenoid valve 2 also leads to a vent 6 as in the Figure 1 system and the switchover valve to a vent 12. The wastegate actuator comprises two chambers 3a and 3b separated by a diaphragm 3c to which is connected an actuating member 3d for the wastegate itself. Chamber 3a is the positive side of the actuator and chamber 3b is the negative or opposing side of the actuator. The diaphragm 3c is spring biassed by a compression spring 3e.

With the above described system, operation under full throttle acceleration of the engine from rest with the arrangement of Figure 2 is as follows.

In the rest condition the engine is idling as before. The full throttle condition has not been used in the preceding 15 seconds and the brake inhibit is not active.

Full throttle is applied and the boost ECU 1 signal is overridden. A duty signal of 100% is applied to the boost control solenoid valve 2. A signal is supplied to the switchover valve in order to positively shut the wastegate, complementing the high signal sent to the boost control solenoid.

The wastegate stays shut until an overboost threshold is reached - this arrangement minimises boost lag considerations during this period.

Once the predetermined overboost threshold is reached the new ECU 10 provides a 70% duty cycle for a short period of time before returning control to the boost ECU 1 for the normal signal moderation control. The short period at 70% duty cycle is necessary to avoid a massive boost undershoot correction on control handover.

A number of "fail safes" are incorporated into the new ECU 10, some of which are listed below:-
1) Circuit can only 'overboost' once in any 15 second period (and not without backing off the throttle in the intervening period).
2) Engine detonation, cruise control and brake inhibits return control to boost ECU.
3) Wiring fault to air pressure boost sensor will return control to the boost ECU.
4) If overboost level is not achieved within a certain time period, control reverts to boost ECU.

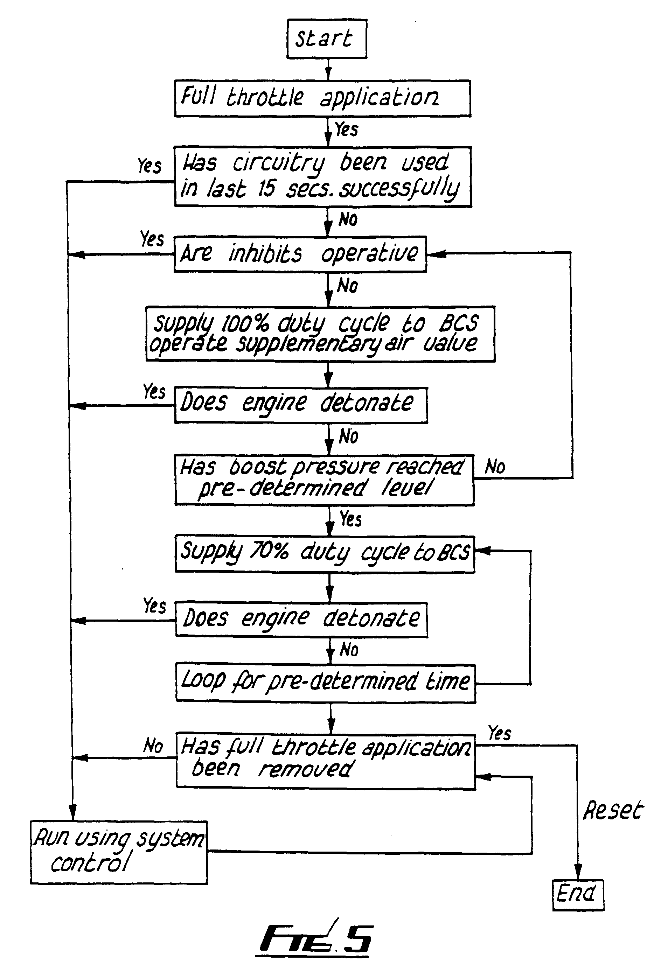

The logic sequence chart for the above described operation is shown in Figure 5.

The graph of Figure 3a shows duty cycle against engine speed for both the existing and proposed arrangement. In this example it can be seen that the desired overboost pressure is reached at an engine speed of 2600 rpm and stead-state type control regained at 2750 rpm. It can be seen that the duty cycle values from the existing boost control system have been overridden from 2000 to 2600 rpm. In actual fact this system has been overridden from the moment of full throttle application. The example figures are such that the duty cycle values from the existing boost control system between idle and 2000 rpm, are the same as those by which they are being overridden.

The graph of Figure 3b shows engine inlet manifold pressures corresponding to the duty cycle values from the graph of Figure 3a. In this example it can be seen that with the existing arrangement, the actual boost values lag the steady-state values until an engine speed of 2800 rpm. In this 'lag' region, the full capabilities of the engine are not being realized. In the proposed arrangement the actual boost value lags only until 2250 rpm. Between 2250 and 2750 rpm. the engine is being 'overboosted', fully exploiting the engine's transient capabilities.

The graph of figure 4a shows duty cycle against time whereas the graph of Figure 4b shows the corresponding inlet manifold pressures. The graph of Figure 4c shows the signal supplied to the switchover valve against time. The characteristic curves are the same as for the graphs of Figures 3a and 3b. The horizontal axes however are distorted due to the flexible couplings within the transmission system of a real chassis.

This arrangement overcomes the prematurely opening wastegate problem. It also exploits the engine's ability to withstand engine boost levels higher than those steady state values for short periods of time.

The new ECU 10 can connect the prior art boost system to the control solenoid (using duty cycles infinitely variable between 0 and 100%) or override the prior art system with other duty cycles. Two values of 100% and 70% have been chosen by way of example, although a refinement of the system might call for more discreet steps (or variable steps) during this override period.

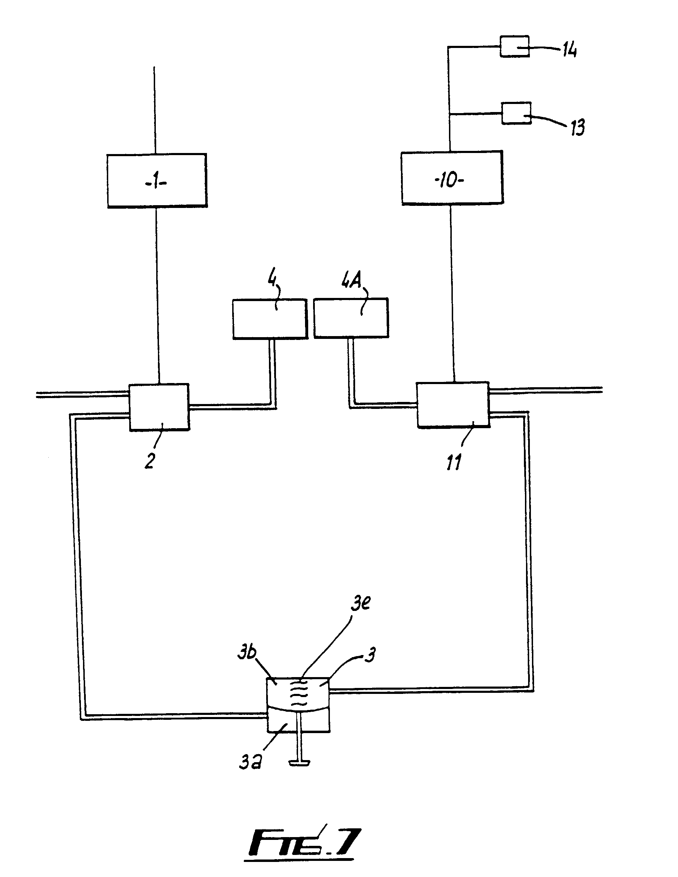

A second embodiment is shown in Figure 7 in which parts equivalent to the embodiment of Figure 2 bear the same reference numerals. In this second embodiment, the additional ECU 10 receives a signal from a full throttle sensor 13 and pressure sensor mounted at the inlet manifold 14. The existing vehicle's boost control system remains in place. An additional switchover valve 11 is connected to receive signals from the additional ECU 10. Air lines run from the switchover valve to the air pressure supply 4A, and the opposing side of the wastegate actuator 3.

With the above described system, operation under full throttle acceleration of the engine from rest is as follows:

When full throttle is applied the additional ECU supplies a high signal to the switchover valve, causing a high pressure in wastegate chamber 3b. Whilst the engine is accelerating up to the torque converter stall speed, the standard boost ECU 1 supplies a high signal to the boost control solenoid 2, causing a low pressure in wastegate chamber 3a. The wastegate is therefore fully shut. Once the torque converter stall speed has been met, the duty cycle full load map within boost control ECU 1 dictates that the signal to the boost control solenoid is reduced to 70%. However, since the manifold boost pressure has not yet met the predetermined level set within the additional ECU, the high signal to the switchover valve is retained. This is sufficient to cause the wastegate to remain shut. When the steady-state manifold boost pressure is reached, the signal supplied by the standard boost control ECU to the boost control solenoid will further begin to reduce from 70%. The wastegate remains shut because a high signal from the additional ECU continues to be sent to the switchover valve. By ensuring that the pressure in wastegate chamber 3b is sufficiently high in consideration of the wastegate spring force 3e, exhaust back pressure and the pressure in wastegate chamber 3a, it is possible to ensure that a high signal at the switchover valve will shut the wastegate valve under all full throttle engine operating conditions. The standard boost control is therefore overridden. Once the predetermined overboost threshold is reached, the additional ECU reduces the signal at the switchover valve gradually, causing a controlled reduction in manifold boost pressure. When the signal at the switchover valve reaches zero, the wastegate position is fully under the control of the signal which the standard ECU sends to the boost control solenoid. Standard operating conditions are therefore regained.

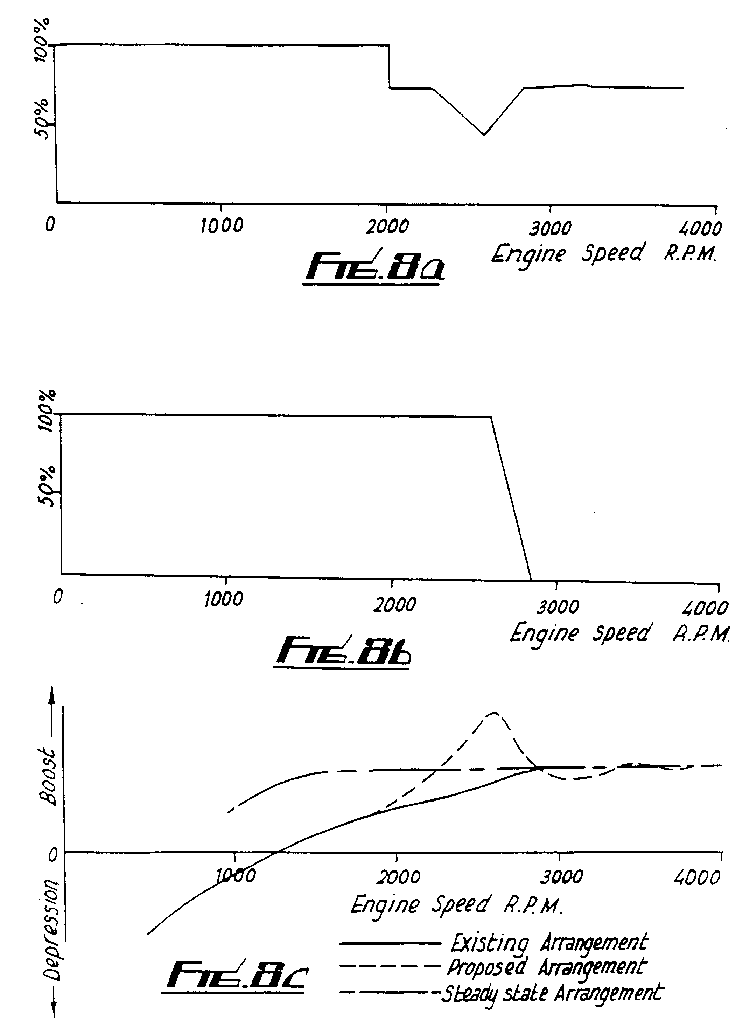

The graphs of Figures 8a, 8b and 8c shows duty cycle (boost control solenoid), signal (switchover valve) and manifold boost pressure against time, under full throttle acceleration from rest.

This system has significant benefits over an integrated boost and overboost system, in that it can easily be fitted as an addition to a standard boost control system. It is apparent that the system can be expanded such that existing sensors employed by the standard boost control system can be used. The first embodiment is one in which the existing manifold pressure sensor and knock sensor signals are employed, in conjunction with cruise control and brake inhibits. The two ECU's may nevertheless be combined to produce a fully integrated boost control system. In conjunction with control of engine fuelling and ignition, a fully integrated engine management system could be envisaged.

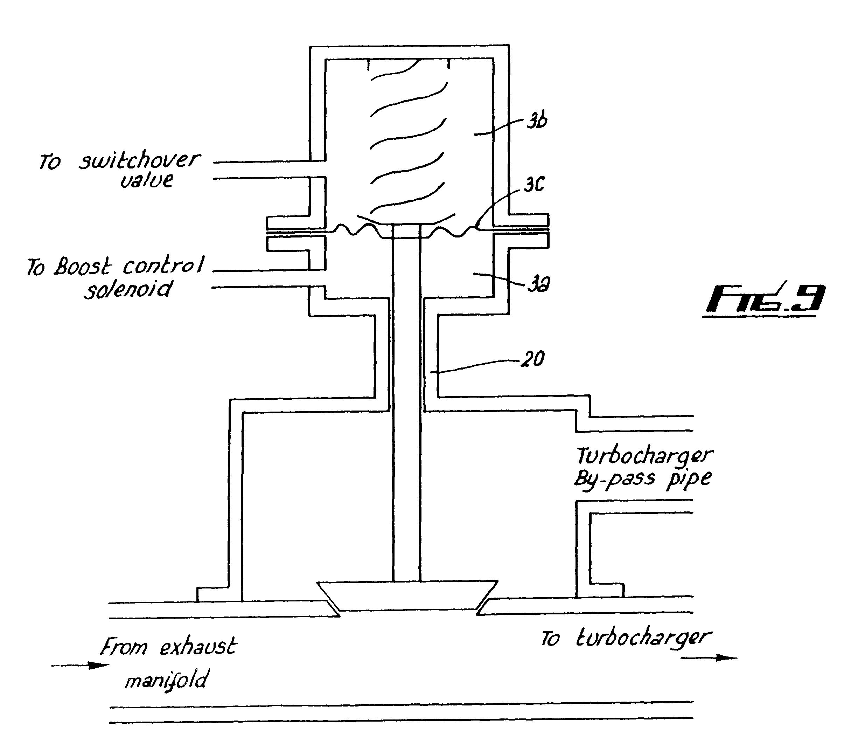

The significance of the switchover valve is as follows:
i. It enables a quick wastegate response, by positively shutting the wastegate when maximum boost is required.
ii. It can provide system independence, whereby the existing boost control system may be left in situ. This is of particular benefit to an 'after market performance kit'.
iii. It enables a high degree of insensitivity to exhaust back pressure. This is of particular importance when a 'poppet' type valve is used as a wastegate. Figure 9 shows such an arrangement. In this design it is possible for exhaust gas to leak past valve guide 20 and effectively bias the diaphragm 3c under high exhaust back pressure conditions. A positive pressure on the opposing side 3b of the diaphragm, controlled by the switchover valve, can ensure that this unwelcome bias pressure does not begin to open the wastegate when full throttle acceleration conditions would benefit from a fully shut wastegate condition.

## Claims

1. Pressure charging apparatus for internal combustion engines comprising means (4) for supplying air under pressure to the engine inlet, a wastegate, a wastegate actuator (3) for closing and opening the wastegate in order to alter the pressure in the engine inlet, the wastegate actuator (3) comprising a first chamber (3a) and a second chamber (3b) separated by a diaphragm (3c) to which a wastegate actuating member (3d) is connected, first valve means (2) operative to receive signals from a first electronic boost control (1) in order to control air flow from the air supply (4) to the first chamber (3a) of the wastegate actuator (3), or via a first vent (6), to atmosphere whereby to control opening of the wastegate, characterised by a second electronic control (10) and second valve means (11) operative to receive signals from the second electronic control (10) and to connect the air supply (4) to the second chamber (3b) of the wastegate actuator (3) or vent the second chamber (3b) to atmosphere via a second vent (12) whereby to control closing of the wastegate, and a full throttle sensor (13) operative under full throttle operating conditions to supply a signal to the second electronic control (10) to cause the second valve means (11) to shut the wastegate thereby overriding the boost control by the first electronic boost control (1) of the first valve means (2) and, once a predetermined overboost threshold is reached, the second electronic control (10) being operative to reduce the signal at the second valve means (11) gradually causing a controlled reduction in manifold boost pressure.

2. Pressure charging apparatus as claimed in claim 1, in which the means for supplying air comprises an air compressor (4).

3. Pressure charging apparatus as claimed in claim 1 or 2, in which the first valve means (2) comprises a boost control solenoid valve (2).

4. Pressure charging apparatus as claimed in claim 3, in which the first electronic boost control (1) is programmed to operate the boost control solenoid valve (2) at a duty cycle which may be infinitely variable between 0 and 100%.

5. Pressure charging apparatus as claimed in claim 3, in which the first electronic boost control (1) is programmed to operate the boost control solenoid valve (2) at a duty cycle of 100%.

6. Pressure charging apparatus as claimed in claim 3, in which the first electronic boost control (1) is programmed to operate the boost control solenoid valve (2) at a duty cycle of 70%.

7. Pressure charging apparatus as claimed in any preceding claim, in which the second valve means (11) comprises a switchover valve (11) and the first electronic boost control (1) and the second electronic control (10) are combined and the second electronic (10) is programmed to operate the switchover valve (11).

8. Pressure charging apparatus as claimed in claim 7, in which the second electronic control (10) is programmed to operate the switchover valve (11) in an infinitely variable manner between fully closed and fully open.

## Patentansprüche

1. Aufladevorrichtung für Brennkraftmaschinen mit Mitteln (4) zur Zuführung von Druckluft nach dem Einlaß der Brennkraftmaschine, mit einer Abgasregelklappe und einem Antrieb (3) für die Abgasregelklappe, um diese Abgasregelklappe zu schließen und zu öffnen und um damit den Druck im Einlaß der Maschine zu ändern, wobei der Antrieb (3) der Abgasregelklappe eine erste Kammer (3a) und eine zweite Kammer (3b) aufweist, die durch eine Membran (3c) voneinander getrennt sind, mit der ein Abgasregelklappen-Betätigungsglied (3d) verbunden ist, mit einem ersten Ventil (2), welches Signale von einer ersten elektronischen Ladersteuerung (1) empfängt, um die Luftströmung von der Luftzuführung (4) nach der ersten Kammer (3a) des Abgasregelklappen-Antriebs (3) oder über einen ersten Auslaß (6) nach der Atmosphäre zu steuern, wodurch die Öffnung der Abgasregelklappe eingestellt wird, gekennzeichnet durch eine zweite elektronische Steuerung (10) und ein zweites Ventil (11), das Signale von der zweiten elektronischen Steuerung (10) erhält und die Luftzufuhr (4) mit der zweiten Kammer (3b) des Abgasregelklappen-Antriebs (3) verbindet oder die zweite Kammer (3b) über einen zweiten Auslaß (12) nach der Atmosphäre entlüftet, wodurch das Schließen der Abgasregelklappe gesteuert wird und gekennzeichnet durch einen Volldrossel-Sensor (13), der unter Arbeitsbedingungen mit voller Drossel bewirkt, daß der zweiten elektronischen Steuerung (10) ein Signal geliefert wird, um das zweite Ventil (11) zu veranlassen, die Abgasregelklappe abzusperren, wodurch die Ladersteuerung durch die erste elektronische Ladersteuerung (1) des ersten Ventils (2) übersteuert wird, und nachdem ein vorbestimmter Überladepegel erreicht ist, wird die zweite elektronische Steuerung (10) wirksam, um das Signal am zweiten Ventil (11) zu vermindern, wodurch eine gesteuerte Verminderung des Ladedrucks in den Leitungen bewirkt wird.

2. Aufladevorrichtung nach Anspruch 1, bei der die Mittel zur Zuführung von Luft aus einem Luftkompressor (4) bestehen.

3. Aufladevorrichtung nach Anspruch 1 oder 2, bei der das erste Ventil (2) aus einem Ladersteuerungs-Magnetventil (2) besteht.

4. Aufladevorrichtung nach Anspruch 3, bei der die erste elektronische Ladersteuerung (1) so programmiert ist, daß das Ladersteuerungs-Magnetventil (2) mit einem Tastverhältnis arbeitet, das zwischen 0 und 100 % stufenlos veränderbar ist.

5. Aufladevorrichtung nach Anspruch 3, bei welcher die erste elektronische Ladersteuerung (1) so programmiert ist, daß das Ladersteuerungs-Magnetventil (2) mit einem Tastverhältnis von 100 % arbeitet.

6. Aufladevorrichtung nach Anspruch 3, bei welcher die erste elektronische Ladersteuerung (1) so programmiert ist, daß das Ladersteuerungs-Magnetventil (2) mit einem Tastverhältnis von 70 % arbeitet.

7. Aufladevorrichtung nach einem der vorhergehenden Ansprüche, bei welcher das zweite Ventil (11) ein Umschaltventil (11) ist und die erste elektronische Ladersteuerung (1) und die zweite elektronische Steuerung (10) kombiniert sind und die zweite elektronische Steuerung (10) so programmiert ist, daß sie das Umschaltventil (11) betätigt.

8. Aufladevorrichtung nach Anspruch 7, bei der die zweite elektronische Steuerung (10) so programmiert ist, daß sie das Umschaltventil (11) stufenlos zwischen einer voll geschlossenen und einer voll geöffneten Stellung betätigt.

## Revendications

1. Dispositif d'alimentation en pression, destiné à fournir de l'air sous pression à des moteurs à combustion interne, comprenant des moyens (4) destinés à fournir de l'air sous pression à l'entrée du moteur, une valve d'évacuation, un actionneur de valve d'évacuation (3) destiné à fermer et à ouvrir la valve d'évacuation de manière à modifier la pression régnant à l'entrée du moteur, l'actionneur de valve d'évacuation (3) comprenant une première chambre (3a) et une deuxième chambre (3b) séparées par un diaphragme (3c) auquel est relié un organe d'actionnement de valve d'évacuation (3d), des premiers moyens de valve (2) agencés pour recevoir des signaux venant d'une première commande de suralimentation électronique (1) dans le but de commander le débit d'air venant de l'alimentation en air (4) vers la première chambre (3a) de l'actionneur de valve d'évacuation (3), ou via un premier évent (6), vers l'atmosphère de manière à commander le taux d'ouverture de la valve d'évacuation, caractérisé par une deuxième commande électronique (10) et des deuxièmes moyens de valve (11) agencés pour recevoir des signaux issus de ladite deuxième électronique (10) et relier l'alimentation en air (4) à la deuxième chambre (3b) de l'actionneur de valve d'évacuation (3) ou mettre à l'évent vers l'atmosphère la deuxième chambre (3b) via un deuxième évent (12), de manière à commander la fermeture de la valve d'évacuation, et un capteur de pleine valeur d'étranglement (13) fonctionnant dans des conditions dans lesquelles l'étranglement est à son maximum pour fournir un signal destiné à la deuxième commande électronique (10) pour provoquer la fermeture, par les deuxièmes moyens formant soupape (11), de la valve d'évacuation, de manière à avoir priorité sur la commande de suralimentation, faite par la commande de suralimentation électronique (11) des premiers moyens formant soupape (2) et, une fois un seuil de suralimentation prédéterminé atteint, la deuxième commande électronique (10) étant agencée pour réduire le signal au niveau des deuxièmes moyens de valve (11), graduellement, provoquant une réduction modulée de la pression de suralimentation dans le collecteur.

2. Appareil de suralimentation par augmentation de la pression selon la revendication 1, dans lequel les moyens destinés à fournir de l'air comprennent un compresseur d'air (4).

3. Appareil de suralimentation par augmentation de la pression selon la revendication 1 ou 2, dans lequel les premiers moyens de valve (2) comprennent une électrovanne de commande de suralimentation (2).

4. Appareil de suralimentation par augmentation de la pression selon la revendication 3, dans lequel la première commande électronique (1) est programmée pour actionner l'électrovanne de commande de suralimentation (2) selon un facteur de cycle de fonctionnement pouvant être variable de façon continue entre 0 et 100 %.

5. Appareil de suralimentation par augmentation de la pression selon la revendication 3, dans lequel la première commande de suralimentation électronique (1) est programmée pour faire fonctionner l'électrovanne de commande de suralimentation (2) sous un facteur de cycle de fonctionnement de 100 %.

6. Appareil de suralimentation par augmentation de la pression selon la revendication 3, dans lequel la première commande électronique (1) est programmée pour faire fonctionner l'électrovanne de commande de suralimentation (2) sous un facteur de cycle de fonctionnement de 70 %.

7. Appareil de suralimentation par augmentation de la pression selon l'une quelconque des revendications précédentes, dans lequel les deuxièmes moyens de valve (11) comprennent une valve de commutation (11) et la première commande de suralimentation électronique (1) et la deuxième commande électronique (10) sont combinées et la deuxième commande électronique (10) est programmée pour faire fonctionner la valve de commutation (11).

8. Appareil de suralimentation par augmentation de la pression selon la revendication 7, dans lequel la deuxième commande électronique (10) est programmée pour faire fonctionner la valve de commutation (11) de façon continûment variable, entre l'état complètement fermé et l'état complètement ouvert.
